# FASCICULE DE BREVET EUROPEEN

(11) **EP 2 042 388 B1**
(45) Date de publication et mention de la délivrance du brevet: **18.08.2010**
(21) Numéro de dépôt: 08163541.9
(22) Date de dépôt: 03.09.2008
(51) Int. Cl.: B60R 21/34, E05D 11/00

(54) **Dispositif de protection des piétons et véhicule muni d'un tel dispositif**
Vorrichtung zum Schutz der Fußgänger und mit dieser Vorrichtung ausgerüstetes Fahrzeug
Device for protecting pedestrians and vehicle equipped with such a device

(30) Priorité: 28.09.2007 FR 0757914
(43) Date de publication de la demande: 01.04.2009
(73) Titulaire: PEUGEOT CITROËN AUTOMOBILES S.A., 78140 Velizy Villacoublay (FR)
(72) Inventeur: Darowny, Fabrice, 91290, LA NORVILLE (FR); Conoy, Thomas, 78330, FONTENAY LE FLEURY (FR); Gourvennec, Thibault, 91170, VIRY CHATILLON (FR)

(56) Documents cités:
- EP-A- 1 104 728
- DE-A1-102004 011 334
- JP-A- 4 212 677
- JP-A- 11 291 948
- JP-A- 2000 006 846

## Description

La présente invention concerne un dispositif de protection des piétons et un véhicule muni d'un tel dispositif.

L'invention concerne plus particulièrement un dispositif de protection des piétons en cas de choc avec un véhicule automobile, permettant le déplacement du capot par rapport à la structure.

Il est connu des véhicules automobiles pourvus de systèmes de protection des piétons rendu actifs lors d'un choc frontal par des moyens dédiés.

L'évolution des normes imposées aux homologations des véhicules automobiles, quelle que soit la catégorie dans laquelle ils se trouvent, incite les constructeurs à intégrer très tôt durant la conception des véhicules, des systèmes de protection des piétons. Il est cependant rendu difficile de transposer certains systèmes de protection connus à un véhicule à bas coût. De tels systèmes nécessitent une mise en oeuvre complexe, coûteuse et difficilement intégrables dans certaines catégories de véhicules automobiles où l'environnement sous capot moteur est restreint, ce qui notamment le cas des véhicules de petite dimension.

On connaît également des systèmes de protection des piétons qui comprennent une charnière d'articulation, liant un capot moteur à la structure de caisse du véhicule. Il est connu que la charnière comprend un axe de liaison d'un charnon mobile monté solidaire du capot, et d'un charnon fixe monté solidaire d'un support d'aile du véhicule. La charnière est bien entendue destinée au déplacement du capot entre les positions de fermeture et d'ouverture du compartiment moteur, selon un mouvement de pivotement.

L'implantation habituelle de la charnière est définie de telle sorte que l'axe de liaison est disposé longitudinalement en retrait du support d'aile, de sorte que lors d'un choc avec un piéton, l'axe de liaison est apte à se déplacer verticalement sans venir en butée contre le support d'aile, qui est jugé comme un point dur. Pour les véhicules de petite dimension, une telle disposition est rendue impossible, de sorte qu'il est nécessaire d'amener l'axe de liaison verticalement au droit du support d'aile. Il devient de même critique de procéder à l'agencement de la charnière lorsque celle-ci comporte un charnon mobile ayant une forme en col de cygne. En effet, l'encombrement d'une telle charnière impose de monter cette dernière de manière affleurant par rapport au support d'aile afin de réduire à son maximum l'encombrement alloué.

L'inconvénient d'un tel agencement est qu'en cas de choc, tant le charnon mobile que l'axe de liaison vient rapidement en appui avec le point dur formé par le support d'aile.

Un but de la présente invention est de pallier tout ou partie des inconvénients de l'art antérieur relevés ci-dessus.

La présente invention a trait à un dispositif de protection des piétons en cas de choc avec un véhicule automobile selon la revendication 1.

EP 1104728 décrit un dispositif selon le préambule de la revendication 1.

Par ailleurs, le dispositif de l'invention peut comporter l'une ou plusieurs des caractéristiques suivantes :
- la structure sur laquelle est montée la charnière d'articulation est une pièce de tôlerie formant un support d'aile avant,
- le charnon fixe comprend un corps central sur lequel est disposé un pied de fixation au support d'aile, chaque pied faisant saillie vertical hors d'un corps central afin de l'écarter verticalement du support,
- la ligne de déformation est située à la jonction entre le corps central et le pied, la ligne étant obtenue par pliage de la tôle formant le charnon fixe, selon un angle de 90°,
- le charnon mobile est apte à pivoter par rapport au charnon fixe autour de la ligne de déformation lorsque l'effort d'un choc est appliqué sur une partie arrière du capot,
- le dispositif comprend un moyen d'articulation du capot destiné au pivotement du charnon mobile par rapport au charnon fixe autour d'un axe parallèle à l'axe de liaison, lorsque l'effort d'un choc est appliqué sur une partie avant du capot, amenant ce dernier d'une position de fermeture du compartiment à une position pivotée vers le bas,
- le charnon mobile est disposé hors de l'ouverture lorsque le capot est en position d'ouverture du compartiment.

La présente invention a aussi trait à un véhicule automobile comportant une aile, un support d'aile formant une partie de la structure de caisse du véhicule, et un capot monté articulé sur la structure de caisse au moyen d'un dispositif comportant l'une quelconque des caractéristiques précédentes, afin de rendre accessible un compartiment.

Par ailleurs le compartiment du véhicule de l'invention est destiné au logement d'un moteur à combustion interne, ledit compartiment étant situé à l'avant du véhicule.

Dans une variante de réalisation, le compartiment du véhicule est destiné au logement des bagages, ledit compartiment étant situé à l'arrière du véhicule.

D'autres avantages et particularités de l'invention ressortent de la description du mode de réalisation faite ci-après en référence aux dessins annexés dans lesquels :

La figure 1 est une représentation schématique de la partie avant d'un véhicule automobile montrant la localisation des moyens de déplacement d'un capot appartenant au dispositif de protection des piétons, conforme à l'invention ;

la figure 2 est une vue en perspective d'un dispositif de protection des piétons selon l'invention,

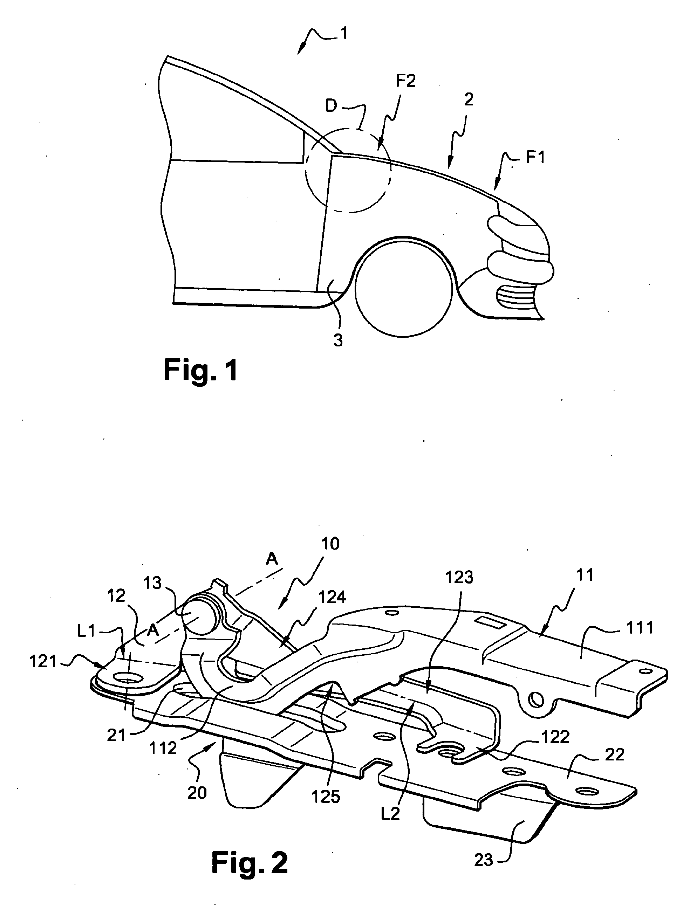

Un véhicule automobile 1, dont seule une représentation partielle de l'avant d'un côté latéral est donnée en figure 1, est pourvu d'un capot 2 et équipé d'un dispositif de protection des piétons en cas de choc frontal.

Le dispositif de protection des piétons comprend un moyen de déplacement vertical coopérant avec un moyen d'articulation du capot 2. Le dispositif de protection est situé dans la zone D. Ledit moyen de déplacement vertical est sollicité lorsqu'un effort lié au choc est donné au capot, tandis que le moyen d'articulation du capot est sollicité lorsque un effort de levée du capot est appliqué à ce dernier. Lesdits moyens de déplacement vertical et d'articulation du capot sont ainsi sollicités par des efforts antagonistes.

Ledit moyen de déplacement vertical est destiné à l'absorption de l'énergie d'un choc frontal provoqué par un piéton.

Il comprend pour cela, une charnière d'articulation 10 disposée entre le capot moteur 2 et la caisse du véhicule 1. La charnière 10 est représentée en figure 2 dans une position de fermeture du capot. Elle comprend un axe de liaison 13 solidaire d'un charnon mobile 11 qui est rendu mobile à rotation, autour d'un axe A-A parallèle à l'axe 13, sur une ouverture d'un charnon fixe 12, de forme complémentaire. Le mouvement de rotation du capot 1 s'effectue par conséquent par rapport à l'axe A-A qui s'étend sensiblement de façon transversale au véhicule.

Le charnon fixe 12 comprend un corps central 123 qui comprend une portion verticale 124 pourvue de l'ouverture au travers de laquelle l'axe 13 s'étend. Les portions 123 et 124 sont disposées verticalement l'une au prolongement de l'autre. Elles sont disposées de façon sensiblement perpendiculaire d'une seconde portion 125, nommée par la suite portion horizontale au vu de son orientation.

La portion 124 comprend une extrémité arrière qui est prolongée par un pied 121 de liaison. Le pied 121 permet de lier une partie arrière du charnon fixe 12 à un moyen formant support d'éléments de carrosserie, qui prend la référence générale 20 dans ce qui suit. De préférence, le moyen formant support 20 est destiné au montage d'une aile, de sorte que dans ce qui suit, le moyen 20 est nommé de support d'aile.

La portion horizontale 125 et le corps central 123 sont aussi liées l'une à l'autre au niveau d'une extrémité opposée, par l'intermédiaire d'un autre pied 122 de liaison, destiné à être disposé à l'avant du véhicule. La portion horizontale 125 est destinée à venir en appui contre le support 20 après déformation du charnon fixe 12.

Par rapport au corps central 123, les pieds 121 et 122 sont respectivement situés aux extrémités arrière et à l'avant du charnon fixe 12. Chaque pied est disposé en saillie vers le bas, par rapport à la portion horizontale 125, ce qui surélève le corps central 123 du support 20, au droit duquel la charnière 10 est agencée. Une telle surélévation créé un éloignement vertical entre le corps 123 et le point dur de la caisse du véhicule, formé par le support 20 d'aile.

Le charnon fixe 12 est ainsi réalisé sous la forme d'un pontet, par des pieds 121 et 122 qui sont reliés entre-eux au moyen du corps central 123.

La jonction entre les portions 124 et 125 du corps principal forme une ligne L2 de déformation qui s'étend de façon linéaire, selon une direction sensiblement parallèle à un axe longitudinal du véhicule. Une autre ligne L1 de déformation est située au niveau de l'extrémité arrière de la charnière 10, à la jonction entre le pied 121 et la portion verticale 124. La ligne L1 s'étend de façon linéaire de l'avant vers l'arrière du véhicule, selon une direction sensiblement orientée vers l'extérieure. L'orientation de la ligne L1 forme un moyen de guidage à la déformation de la charnière fixe lors d'un choc, de sorte que cette derrière est, par rapport au véhicule, dirigée vers l'extérieur selon un mouvement détaillé ci-après.

Les lignes L1 et L2 de déformation sont formées par une moindre épaisseur de matière obtenue par des pliages des portions entre-elles, selon un angle d'environ 90°. Plus précisément, l'angle de pliage entre les portions 121 et 124, ou 123 et 125, ou 123 et 122, est d'environ 90°.

Ainsi conformée, la charnière 10 est apte à s'abaisser légèrement en retrait de la position de fermeture du compartiment moteur selon un mouvement de rotation du corps central 123 par rapport aux pieds 121 et 122, le long des lignes L1 et L2.

La déformation du charnon fixe n'est toutefois rendu possible qu'au moyen d'une ouverture 21 ménagée dans le support 20 d'aile, laquelle rend apte le passage du charnon mobile 11 lié au charnon fixe.

Le support 20 d'aile a sensiblement la forme d'une équerre qui définit une portion verticale 23 destinée au montage du support directement sur la structure de caisse du véhicule, comme plus précisément une poutre longitudinale formée par le brancard (non représenté) du véhicule. La portion 23 s'étend de façon sensiblement perpendiculaire d'une portion supérieure 22 sur laquelle une aile avant 3 est fixée.

L'ouverture 21 susmentionnée est ménagée au travers la partie supérieure 22 du support 20 d'aile. Elle est de forme sensiblement oblongue et de dimension sensiblement complémentaire à celle d'une partie arrière du charnon mobile 11. La partie du charnon mobile 11 qui s'étend verticalement à l'intérieur de l'ouverture 21 est une partie arrière 112 formée d'un col de cygne. Toutefois, dans la position de fermeture du compartiment moteur, seule une partie inférieure du charnon mobile 11 est disposée au travers de l'ouverture 21.

Le charnon mobile 11 comprend une portion 111 plane qui s'étend de façon sensiblement horizontale lorsque le capot est en position de fermeture du compartiment moteur. La portion 111 est prolongée par la portion 112 en forme de col de cygne qui définit un passage incurvée vers le haut qui est destinée à contourner un enjoliveur d'aile non représenté, lorsque le capot 1 est basculé dans sa position d'ouverture du compartiment moteur.

La portion 112 est destinée à s'étendre en partie au travers de l'ouverture 21 après déformation de la charnière. C'est la raison pour laquelle, la charnière 10 est en partie rendue effaçable à l'intérieur, du moins sous la structure de caisse formée par le support 20 d'aile.

L'extrémité arrière de la portion 112 est la partie de la charnière mobile qui comprend l'axe d'articulation 13. Ainsi disposé, l'axe 13 est disposé entre les pieds 121 et 122. Dans la position de fermeture du compartiment moteur, la portion 112 de la charnière 10 s'étend horizontalement entre les pieds 121 et 122 de liaison de la charnière au support 20, qui sont également en saillie horizontale par rapport au corps centrale 123.

Dans ce qui suit est décrit le fonctionnement du dispositif de protection des piétons de l'invention.

Le véhicule automobile 1 comprenant un support 20 d'aile 3, monté solidaire de la structure de caisse (non représentée).

La partie arrière du capot 2 est montée à rotation autour de la structure de caisse au moyen du dispositif de l'invention, tel que décrit précédemment.

Le capot 2 est lié, en sa partie avant, à la structure de caisse par un moyen de verrouillage (non représenté) et vient en appui contre des butées (non représentée) situé à entre le capot 2 à la structure du véhicule. Ledit moyen de verrouillage et les butées forment des points de liaison. Tout ou partie de ces points de liaison sont réalisés au moyen d'une pièce fusible qui est apte à se rompre sous l'effet du choc avec un piéton, dont l'effort résultant est dirigé du haut vers le bas.

La zone arrière du capot 2, qui prend la référence générale D à la figure 1, comprend de préférence deux charnières 10 disposées par symétrie aux extrémités latérales arrière du capot. Chaque charnière 10 forme un point de liaison arrière.

C'est ainsi que la rupture du point de liaison situé à l'avant du véhicule s'accompagne d'un déplacement en rotation du capot 2 autour de l'axe 13. Le capot 2 passe ainsi d'une position de fermeture du compartiment moteur à une position pivotée vers le bas, autour de l'axe A-A. La rupture des points de liaison avant résulte d'un effort appliqué au capot 2 et provenant d'un choc frontal avec un piéton de la taille d'un enfant. L'effort est sensiblement orienté selon la direction donnée par la flèche F1 de la figure 1.

Lorsque le capot 2 reçoit un effort provenant d'un choc frontal avec un piéton de la taille d'un adulte, l'effort est sensiblement orienté selon la direction donnée par la flèche F2. Cet effort est appliqué à l'arrière du capot 2, comme cela est illustré à la figure 1. Dans ce cas, les points de liaison situé à l'arrière du capot 2 absorbent l'énergie du choc par déformation du charnon fixe 12 au niveau des lignes L1 et L2. Durant la déformation du charnon fixe, le charnon mobile 11 s'efface en partie au travers de l'ouverture 21. Le support 20 d'aile formant pièce de structure ne fait pas obstruction au déplacement vertical du capot qui passe ainsi d'une position de fermeture à une position abaissée vers le bas.

Dans une variante de réalisation, le support 20 est un support d'aile arrière de sorte que la zone D est située à l'arrière du véhicule. Le capot 2 est donc articulé sur la caisse au moyen du dispositif de protection décrit ci-dessus, favorisant ainsi la communauté des pièces. Même si les normes n'imposent pas encore l'agencement d'un tel dispositif à l'arrière du véhicule, l'application du dispositif à l'arrière de véhicule permet d'absorber l'énergie d'un choc à faible vitesse, dit aussi choc réparabilité. Le capot 2 est destiné à rendre accessible le compartiment de coffre.

Un tel dispositif de protection est remarquable en ce qu'il permet de protéger les piétons d'un choc avec un véhicule pourvu d'un tel dispositif. Avantageusement, un tel dispositif est agencé sur une structure de caisse de véhicule de petite dimension où l'encombrement de la fonction protection des piétons et articulation du capot est restreinte.

De plus un tel dispositif trouve une destination tant à l'avant qu'à l'arrière d'une structure de caisse, et peut venir se substituer aux dispositifs connus qui sont de conception complexe et coûteuse.

## Revendications

1. Dispositif de protection des piétons en cas de choc avec un véhicule (1) automobile, comprenant au moins une charnière (10) d'articulation du capot (2) à la structure (20) du véhicule permettant le déplacement du capot (2) par rapport à la structure (20) entre une position de fermeture d'un compartiment et une position déployée d'ouverture vers le haut, autour d'un axe (13) de liaison d'un charnon mobile (11) à un charnon fixe (12), le dispositif de protection comprenant un moyen de déplacement vertical du capot (1) par rapport à la structure (20) entre une position de fermeture du compartiment et une position abaissée vers le bas, formé d'au moins une ligne (L1, L2) de déformation disposée sur le charnon fixe (12), **caractérisé en ce qu'**il comprend une ouverture (21), ménagée sur la structure (20), au travers de laquelle le charnon mobile (11) est apte à se déplacer pour pivoter vers le bas le capot (2) lors d'un choc avec un piéton, l'ouverture (21) étant de forme oblongue et de dimension sensiblement complémentaire à celle de la partie arrière du charnon mobile (11).

2. Dispositif selon la revendication 1, **caractérisé en ce que** la structure (20) sur laquelle est montée la charnière (10) d'articulation est une pièce de tôlerie formant un support d'aile (3) avant.

3. Dispositif selon la revendication 1 ou 2, **caractérisé en ce que** le charnon fixe (12) comprend un corps central (123) sur lequel est disposé un pied (121, 122) de fixation au support (20) d'aile, chaque pied (121, 122) faisant saillie vertical hors d'un corps central (123) afin de l'écarter verticalement du support (20).

4. Dispositif selon l'une des revendications 1 à 3, **caractérisé en ce que** la ligne (L1, L2) de déformation est située à la jonction entre le corps central (123) et le pied (121, 122), la ligne étant obtenue par pliage de la tôle formant le charnon fixe, selon un angle de 90°, le charnon mobile (11) étant apte à pivoter par rapport au charnon fixe (12) autour de la ligne (L1, L2) de déformation lorsque l'effort (F2) d'un choc est appliqué sur une partie arrière du capot (2).

5. Dispositif selon l'une des revendications 1 à 4, **caractérisé en ce qu'**il comprend un moyen d'articulation du capot (2) destiné au pivotement du charnon mobile (11) par rapport au charnon fixe (12) autour d'un axe (A-A) parallèle à l'axe (13) de liaison, lorsque l'effort (F1) d'un choc est appliqué sur une partie avant du capot (2), amenant ce dernier d'une position de fermeture du compartiment à une position pivotée vers le bas.

6. Dispositif selon l'une quelconque des revendications 1 à 5, **caractérisé en ce que** le charnon mobile (11) est disposé hors de l'ouverture (21) lorsque le capot (2) est en position d'ouverture du compartiment.

7. Véhicule (1) automobile comportant une aile (3), un support d'aile (20) formant une partie de la structure de caisse du véhicule, et un capot (2) monté articulé sur la structure de caisse au moyen d'un dispositif de protection des piétons conforme à l'une quelconque des revendications précédentes.

8. Véhicule (1) selon la revendication 7, **caractérisé en ce que** le compartiment est utilisé au logement d'un moteur, ledit compartiment moteur étant situé à l'avant du véhicule.

9. Véhicule (1) selon la revendication 7, **caractérisé en ce que** le compartiment est utilisé au logement des bagages, ledit compartiment à bagages étant situé à l'arrière du véhicule.

## Claims

1. Device for protecting pedestrians in the event of an impact with a motor vehicle (1), comprising at least one hinge (10) articulating the bonnet (2) to the structure (20) of the vehicle and enabling the bonnet (2) to move with respect to the structure (20), between a position closing a compartment and an extended upwardly open position, about a pin (13) connecting a moving knuckle (11) to a fixed knuckle (12), the protecting device comprising a means for moving the bonnet (1) vertically with respect to the structure (20) between a position closing the compartment and a downwardly lowered position, said means being formed by at least one line (L1, L2) of deformation on the fixed knuckle (12), **characterized in that** said device comprises an opening (21), formed in the structure (20), through which the moving knuckle (11) can move in order to pivot the bonnet (2) downwards when an impact with a pedestrian takes place, the opening (21) having an oblong shape and a size approximately complementary to that of the rear part of the moving knuckle (11).

2. Device according to Claim 1, **characterized in that** the structure (20) on which the articulation hinge (10) is mounted is a sheet metal part forming a support for the front wing (3).

3. Device according to Claim 1 or 2, **characterized in that** the fixed knuckle (12) comprises a central body (123) on which there is a foot (121, 122) for fixing to the wing support (20), each foot (121, 122) protruding vertically from a central body (123) in order to space it apart vertically from the support (20).

4. Device according to one of Claims 1 to 3, **characterized in that** the line (L1, L2) of deformation is located at the junction between the central body (123) and the foot (121, 122), the line being obtained by folding the sheet metal forming the fixed knuckle about an angle of 90°, the moving knuckle (11) being able to pivot with respect to the fixed knuckle (12) about the line (L1, L2) of deformation when the force (F2) of an impact is applied to a rear part of the bonnet (2).

5. Device according to one of Claims 1 to 4, **characterized in that** it comprises a means of articulating the bonnet (2), which means is intended to pivot the moving knuckle (11) with respect to the fixed knuckle (12) about an axis (A-A) parallel to the connecting pin (13) when the force (F1) of an impact is applied to a front part of the bonnet (2), causing the latter to move from a position closing the compartment into a downwardly pivoted position.

6. Device according to any one of Claims 1 to 5, **characterized in that** the moving knuckle (11) is outside the opening (21) when the bonnet (2) is in the position opening the compartment.

7. Motor vehicle (1) having a wing (3), a wing support (20) forming part of the vehicle body structure, and a bonnet (2) mounted in an articulated manner on the body structure by means of a device for protecting pedestrians in accordance with any one of the preceding claims.

8. Vehicle (1) according to Claim 7, **characterized in that** the compartment is used to house the engine, said engine compartment being located at the front of the vehicle.

9. Vehicle (1) according to Claim 7, **characterized in that** the compartment is used to house luggage, said luggage compartment being located at the rear of the vehicle.

## Patentansprüche

1. Vorrichtung zum Schutz von Fußgängern bei einem Zusammenstoß mit einem Kraftfahrzeug (1), mit wenigstens einem Gelenk (10) zum Anlenken der Haube (2) an der Struktur (20) des Fahrzeugs, das eine Verlagerung der Haube (2) in Bezug auf die Struktur (20) zwischen einer Position, in der der Raum geschlossen ist, und einer nach oben offenen, aufgespannten Position um eine Achse (13) für die Verbindung eines beweglichen Scharnierteils (11) mit einem festen Scharnierteil (12) ermöglicht, wobei die Schutzvorrichtung ein Mittel enthält, um die Haube (1) in Bezug auf die Struktur (2) zwischen einer Position, in der der Raum geschlossen ist, und einer nach unten abgesenkten Position vertikal zu verlagern, das durch wenigstens eine Verformungslinie (L1, L2) gebildet ist, die über dem festen Scharnierteil (12) angeordnet ist, **dadurch gekennzeichnet, dass** sie eine Öffnung (21) aufweist, die in der Struktur (20) ausgebildet ist und durch die sich das bewegliche Scharnierteil (12) verlagern kann, um die Haube (2) bei einem Zusammenstoß mit einem Fußgänger nach unten zu schwenken, wobei die Öffnung (21) eine längliche Form und eine Abmessung besitzt, die zu jener des hinteren Teils des beweglichen Scharniers (11) im Wesentlichen komplementär ist.

2. Vorrichtung nach Anspruch 1, **dadurch gekennzeichnet, dass** die Struktur (2), an der das Scharniergelenk (10) angebracht ist, ein Blechteil ist, das einen Träger für den vorderen Kotflügel (3) bildet.

3. Vorrichtung nach Anspruch 1 oder 2, **dadurch gekennzeichnet, dass** das feste Scharnierteil (12) einen Mittelkörper (123) aufweist, an dem ein Fuß (121, 122) für die Befestigung am Kotflügelträger (2) angeordnet ist, wobei jeder Fuß (121, 122) aus einem Mittelkörper (123) vertikal vorsteht, um ihn vom Träger (20) vertikal zu beabstanden.

4. Vorrichtung nach einem der Ansprüche 1 bis 3, **dadurch gekennzeichnet, dass** die Verformungslinie (L1, L2) an der Verbindungsstelle zwischen dem Mittelkörper (123) und dem Fuß (121, 122) vorhanden ist, wobei die Linie durch Biegen des das feste Scharnierteil bildenden Blechs um einen Winkel von 90° erhalten wird, wobei das bewegliche Scharnierteil (11) in Bezug auf das feste Scharnierteil (12) um die Verformungslinie (L1, L2) schwenken kann, wenn die Kraft (F2) eines Zusammenstoßes auf den hinteren Teil der Haube (2) ausgeübt wird.

5. Vorrichtung nach einem der Ansprüche 1 bis 4, **dadurch gekennzeichnet, dass** sie ein Mittel zum Anlenken der Haube (2) aufweist, das dazu bestimmt ist, das bewegliche Scharnierteil (11) in Bezug auf das feste Scharnierteil (12) um eine zur Verbindungsachse (13) parallele Achse (A-A) zu schwenken, wenn die Kraft (F1) eines Zusammenstoßes auf einen vorderen Teil der Haube (2) ausgeübt wird, wodurch diese Letztere aus einer Position, in der der Raum geschlossen ist, in eine nach unten geschwenkte Position geführt wird.

6. Vorrichtung nach einem der Ansprüche 1 bis 5, **dadurch gekennzeichnet, dass** das bewegliche Scharnierteil (11) außerhalb der Öffnung (21) angeordnet ist, wenn sich die Haube (2) in der Position, in der der Raum geöffnet ist, befindet.

7. Kraftfahrzeug (1), mit einem Kotflügel (3), einem Kotflügelträger (20), der einen Teil der Karosseriestruktur des Fahrzeugs bildet, und einer Haube (2), die an der Karosseriestruktur mittels einer Vorrichtung zum Schutz von Fußgängern nach einem der vorhergehenden Ansprüche schwenkbar angebracht ist.

8. Fahrzeug (1) nach Anspruch 7, **dadurch gekennzeichnet, dass** der Raum als Motoraufnahmeraum verwendet wird, wobei sich der Motorraum im vorderen Bereich des Fahrzeugs befindet.

9. Fahrzeug (1) nach Anspruch 7, **dadurch gekennzeichnet, dass** der Raum als Gepäckaufnahmeraum verwendet wird, wobei sich der Gepäckraum im hinteren Bereich des Fahrzeugs befindet.
